# EUROPÄISCHE PATENTSCHRIFT

(11) **EP 1 988 095 B1**
(45) Veröffentlichungstag und Bekanntmachung des Hinweises auf die Patenterteilung: **27.01.2016**
(21) Anmeldenummer: 08007689.6
(22) Anmeldetag: 21.04.2008
(51) Int. Cl.: C07F 5/02

(54) **Verfarhen zur Herstellung von Aminoaryl- bzw. heteroarylboronsaeuren und ihren Derivaten**
Method for manufacturing aminoaryl or heteroaryl boronic acid and their derivatives
Procédé de fabrication d'acides de bore aminoaryle ou hétéroaryl et leurs dérivés

(30) Priorität: 27.04.2007 DE 102007020401; 31.05.2007 DE 102007025449
(43) Veröffentlichungstag der Anmeldung: 05.11.2008
(73) Patentinhaber: Euticals GmbH, 65929 Frankfurt am Main (DE)
(72) Erfinder: Kressierer, Christoph J., Dr., 93051 Regensburg (DE); Lehnemann, Bernd Wilhelm, Dr., 51063 Köln (DE); Jung, Jörg, Dr., 65439 Flörsheim (DE)
(74) Vertreter: Schweitzer, Klaus

(56) Entgegenhaltungen:
- EP-A- 1 479 686
- WO-A-2006/065001
- US-A1- 2005 171 131
- US-A1- 2006 154 973
- LEE BUN YEOUL ET AL: "Bimetallic anilido-aldimine zinc complexes for epoxide/CO2 copolymerization." JOURNAL OF THE AMERICAN CHEMICAL SOCIETY 9 MAR 2005, Bd. 127, Nr. 9, 9. März 2005 (2005-03-09), Seiten 3031-3037, XP002495645 ISSN: 0002-7863
- BAUDOIN OLIVIER ET AL: "Synthesis and biological evaluation of A-ring biaryl-carbamate analogues of rhazinilam." BIOORGANIC & MEDICINAL CHEMISTRY NOV 2002, Bd. 10, Nr. 11, November 2002 (2002-11), Seiten 3395-3400, XP002495646 ISSN: 0968-0896
- REBSTOCK ANNE-SOPHIE ET AL: "Synthesis and deprotonation of 2-(pyridyl)phenols and 2-(pyridyl)anilines." ORGANIC & BIOMOLECULAR CHEMISTRY 7 SEP 2003, Bd. 1, Nr. 17, 7. September 2003 (2003-09-07), Seiten 3064-3068, XP002495647 ISSN: 1477-0520
- DIMAURO ERIN F ET AL: "Discovery of aminoquinazolines as potent, orally bioavailable inhibitors of Lck: synthesis, SAR, and in vivo anti-inflammatory activity." JOURNAL OF MEDICINAL CHEMISTRY 21 SEP 2006, Bd. 49, Nr. 19, 21. September 2006 (2006-09-21), Seiten 5671-5686, XP002495648 ISSN: 0022-2623

## Beschreibung

Die Erfindung betrifft ein Verfahren zur Herstellung von Aminoaryl- bzw. -heteroarylboronsäuren und ihren Estern und Salzen, wobei eine gegebenenfalls substituierte Aminoaryl- bzw. -heteroarylverbindung am Stickstoff durch Kondensation mit einer Carbonylverbindung geschützt, dann metalliert und mit einer geeigneten Borverbindung umgesetzt wird, wodurch je nach Aufarbeitung und Entfernung der Schutzgruppe die entsprechende Boronsäure, ihr Anhydrid oder ein Boronsäureester erhalten wird (GLEICHUNG 1).

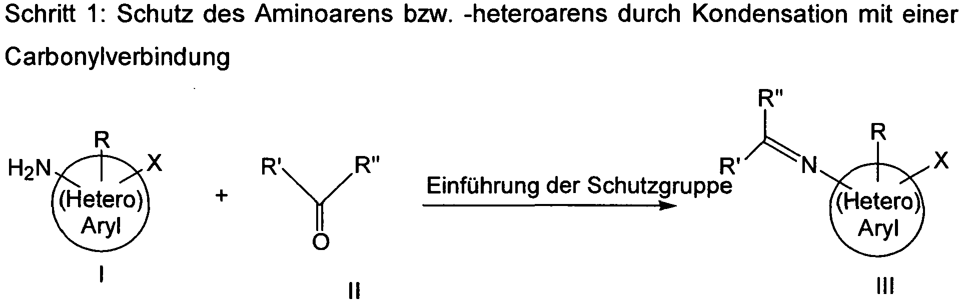

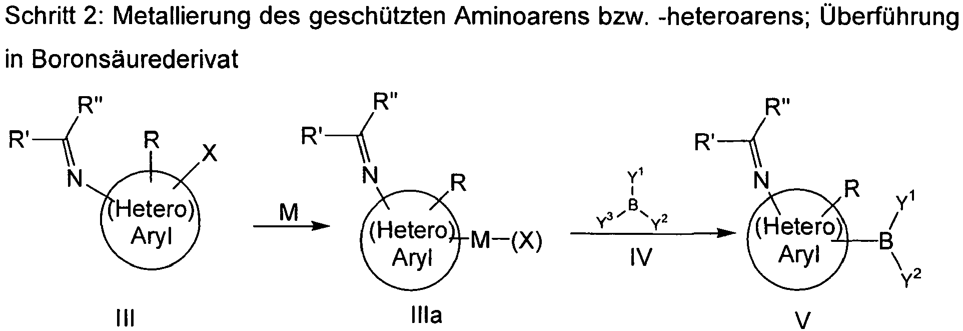

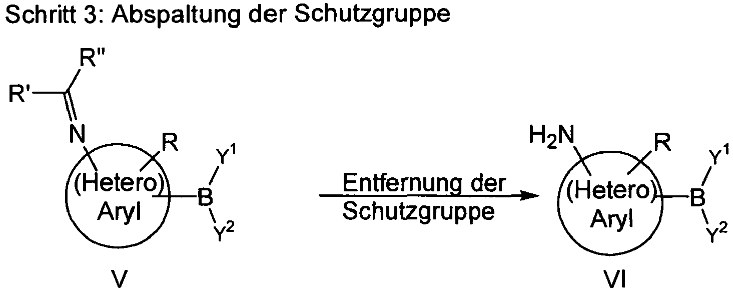

### GLEICHUNG 1

Die Anwendung übergangsmetallkatalysierter Reaktionen, insbesondere zur Knüpfung von Kohlenstoff-Kohlenstoff-Bindungen mit Palladium- oder Nickelkatalysatoren, hat in den letzten Jahren zunehmend Eingang in die industrielle Synthese von pharmazeutischen Wirkstoffen, Spezial- und Feinchemikalien gefunden, da sie häufig unter sehr milden Bedingungen und mit guten Chemoselektivitäten ablaufen. Dabei wird im Allgemeinen ein Alkenyl-, Alkinyl-, Aryl- oder Heteroarylhalogenid mit einem Alken (Heck-Reaktion) oder einer metallorganischen Verbindung gekuppelt. Insbesondere mit klassischen Synthesemethoden nicht zugängliche, asymmetrisch substituierte Biphenyl-Derivate werden auf diese Weise hergestellt. Die dabei am häufigsten angewandte Methode ist die Suzuki- oder Suzuki-Miyaura-Kupplung, bei der Boronsäuren oder ihre Derivate, gelegentlich auch Alkylborane, als metallorganische Kupplungspartner eingesetzt werden. Aufgrund ihrer vergleichsweise geringen Reaktivität tolerieren diese Borverbindungen die Anwesenheit vieler funktioneller Gruppen im Molekül und lassen sich sogar in wässrigen Reaktionsmedien umsetzen. Ebenso ist ihre Toxizität niedrig gegenüber anderen vergleichbar reaktiven Metallorganylen, z.B. Organozinnverbindungen (Stille-Kupplung).

Organische Arylboronsäuren und ihre Derivate werden meist durch Umsetzung einer Aryllithium- oder -magnesium-Verbindung mit einem Borsäuretrialkylester und anschließender wässrig-saurer Hydrolyse hergestellt.

Dieser Syntheseweg lässt sich nicht direkt auf Aminoaryl- oder -heteroarylboronsäuren übertragen, da die beiden relativ aziden Wasserstoffatome der Aminogruppe die Herstellung einer metallorganischen Verbindung des Aminoarens bzw. -heteroarens unmöglich machen. Ein einfacher Schutz der Aminogruppe, wie in der Peptidsynthese üblich, ist nicht ausreichend, da auch das noch vorhandene zweite Wasserstoffatom reaktiv gegenüber polaren Organometallverbindungen ist.

Die Literatur zu diesem Thema beschreibt Versuche, die Aminogruppe in Phenylboronsäure einzuführen, indem die Phenylboronsäure nitriert und die eingeführte Nitrogruppe reduziert wird. Dabei wird ein Isomerengemisch erzeugt, das je nach Reaktionsbedingungen hauptsächlich aus der *ortho-* oder der *meta-*Nitrophenylboron-säure (jeweils 60 bis 70 % Ausbeute) besteht; die para-Nitrophenylboronsäure konnte dabei nur in sehr geringen Mengen als Nebenprodukt gewonnen, aber nicht vollständig charakterisiert werden. Die *ortho-* und *meta-*Aminophenylboronsäuren wurden durch Reduktion der Nitroverbindungen, entweder mit Eisen(II)-Salzen oder Wasserstoff an Platin, in mittleren Ausbeuten dargestellt und als Carbonsäureanilide isoliert. (Seaman und Johnson, J. Am. Chem. Soc. 1931, 53, 713). Bei der Nitrierung wurde stets ein gewisser Anteil an Nitrobenzol und Borsäure erhalten, obwohl bei tiefen Temperaturen (bis -30 °C, vgl. u.) gearbeitet wurde. In der Folgeveröffentlichung (Bean und Johnson, J. Am. Chem. Soc. 1932, 54, 4415) wurde dieser Verlust der Borgruppe sogar als ausschließliche Reaktion bei der Nitrierung von 4-Methoxyphenylboronsäure beschrieben. Auch hier scheiterte eine spätere Funktionalisierung von Phenylboronsäuren in para-Position vollständig. Die Empfindlichkeit der Bor-Kohlenstoff-Bindung in Aromaten gegen Elektrophile wurde von Kuivila und Hendrickson (J. Am. Chem. Soc. 1952, 74, 5068) durch Bromolyse von Phenylboronsäuren demonstriert. Dabei zeigte sich, dass elektronenarme Phenylboronsäuren stabiler waren als elektronenreiche, was später zur Synthese einiger elektronenziehend substituierter Boronsäuren genutzt wurde (Torssell, Meyer, Zacharias, Ark. Kemi 1957, 10, 35, 497). In derselben Veröffentlichung wird auch die Darstellung einer 4-Amino-3-nitrophenylboronsäure in einer vielstufigen Sequenz beschrieben, ausgehend von Tolylboronsäure wurde bei tiefer Temperatur (-40 °C) nitriert, die Methylgruppe zur Säure oxidiert, über das Säurechlorid ein Azid eingeführt, dieses durch Curtius-Reaktion zur Acetylamino-Gruppe abgebaut und diese verseift (14 % Gesamtausbeute).

Eine weitere Methode, Boronsäurederivate aufzubauen, besteht in der übergangsmetallkatalysierten Kupplung von Dioxaborolanen (vgl. Murata et al., J. Org. Chem. 2000, 65, 164) oder Dioxaborolanylen (vgl. Zaidlewicz et al., J. Organomet. Chem. 2002, 657, 129) mit Halogenaromaten. Diese Reaktion verläuft mit Haloanilinen mit 7 % Ausbeute bislang jedoch nicht zufriedenstellend (Baudoin et al., J. Org. Chem. 2000, 65, 9268).

Ferner wäre die Einführung einer Boronsäurefunktion in eine aromatische Nitroverbindung mit folgender Hydrierung denkbar. Aufgrund der Reaktivität der Nitrogruppe erfordert dies jedoch extrem tiefe Temperaturen und ist auf wenige Substrate beschränkt (vgl. Köbrich et al., Angew. Chem. 1966, 78, 1062; Knochel et al., Angew. Chem. 2002, 114, 1680).

In der EP-A-1 479 686 wird ein Verfahren zur Herstellung von Anilinboronsäuren offenbart worin die beiden Protonen des Amins durch zwei separate Schutzgruppen (PG₂) geschützt werden.

Es bestand daher die Aufgabe, ein Verfahren zur Verfügung zu stellen, das es erlaubt, Aminoaryl- bzw. -heteroarylboronsäuren (VI) - vor allem auch solche, die die Aminogruppe in *para*-Stellung zur Boronsäurefunktion tragen - und ihre Derivate herzustellen, das mit vielen Substituenten und Substitutionsmustern kompatibel ist, weder vielstufige Synthesesequenzen noch technisch schwer beherrschbare Reaktionen wie den Curtius-Abbau umfasst, hohe Ausbeuten erzielt und ökonomisch sinnvoll ist. Dies ist die Voraussetzung für eine technische Herstellung und weitere Verwendbarkeit von Aminoaryl- bzw. -heteroarylboronsäuren (VI).

Die vorliegende Erfindung erfüllt diese Ansprüche und betrifft ein Verfahren zur Herstellung von Aminoaryl- bzw. -heteroarylboronsäuren der Formel VI und ihren Derivaten.

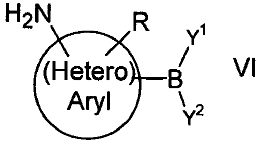

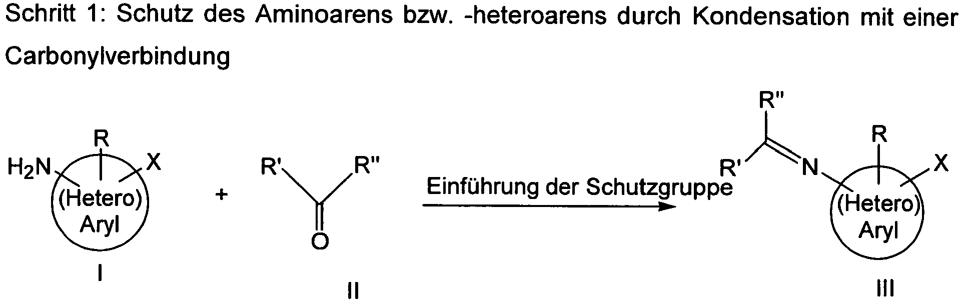

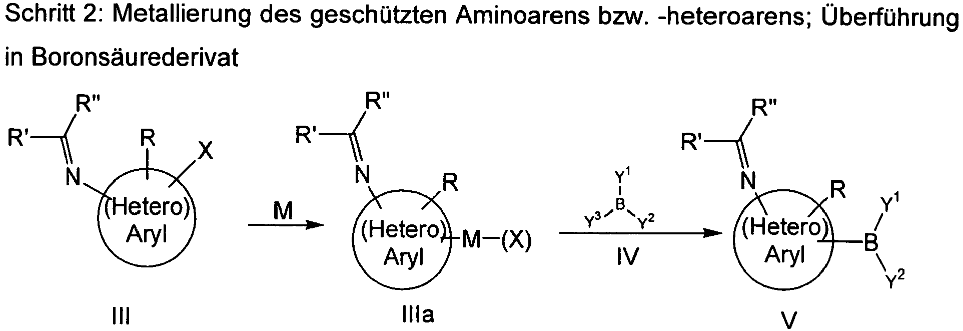

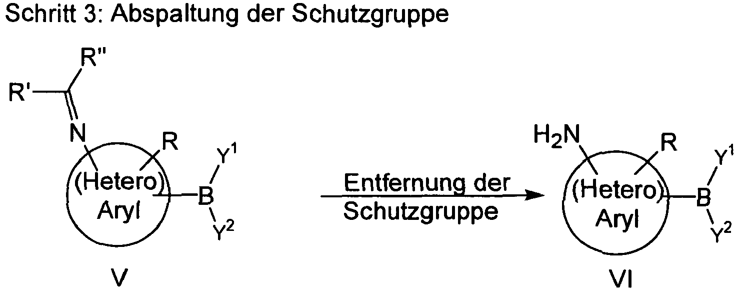

Durch Reaktion eines Aminoarens oder -heteroarens (I) 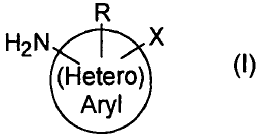 mit einer Carbonylverbindung (II) 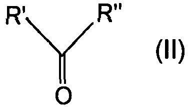 wird (I) zu einem geschützten Aminoaren bzw. -heteroaren (III) 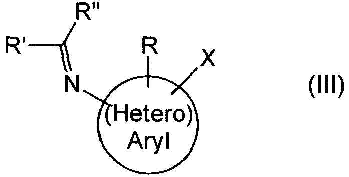 umgesetzt.

Die Metallierung von (III) mit gleichzeitiger oder anschließender Umsetzung mit einer Borverbindung (IV) 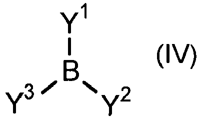 führt zu einer geschützten Aminoaryl- bzw. -heteroaryl-borverbindung der Formel V, 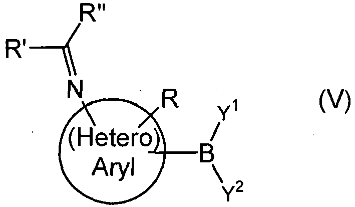 die durch Abspaltung der Schutzgruppe durch Wiederfreisetzung der Carbonylverbindung (II) in die Aminoaryl- bzw. -hetero-arylborverbindung der Formel VI 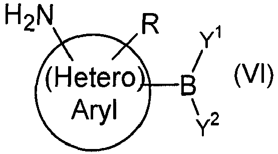 überführt wird, wobei die Substituenten 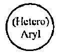 , R, R', R", X, Y¹, Y² und Y³ die in den Ansprüchen genannten Bedeutungen haben.

Unter "(Niedrig)-Alkyl" im Sinne der Erfindung wird ein verzweigter oder unverzweigter C₁-C₆-, bevorzugt C₁-C₄-Alkylrest verstanden, insbesondere Methyl, Ethyl, Propyl, Isopropyl, Butyl, Isobutyl, Tertiärbutyl, Pentyl oder Hexyl, besonders bevorzugt Methyl, Ethyl, Propyl oder Butyl.

"Ein- oder mehrfach substituiert" oder "substituiert" im Sinne der Erfindung bedeutet, dass der jeweilige Rest ein-, oder sofern möglich, zwei-, drei- oder mehrfach durch Halogen, bevorzugt Chlor oder Brom, und/oder durch Nitro, Cyano, Hydroxy, (Niedrig)-Alkyl, (Niedrig)-Alkyloxy, Amino, Mono-(niedrig)-alkylamino, Di-(niedrig)-alkylamino, Monoarylamino, Diarylamino, (Niedrig)-Alkylthio, Arylthio, Carboxyl und/oder (Niedrig)-Alkyloxycarbonyl substituiert ist.

Sofern nicht konkret angegeben handelt es sich bei "Aryl" um einen mono-, di-, tri- oder polycyclischen C₅- bis C₂₀-Arylrest, insbesondere um Phenyl, Naphthyl, Diphenyl oder Indenyl.

Sofern nicht konkret angegeben handelt es sich bei"Heteroaryl" um einen mono-, di-, tri- oder polycyclischen C₅- bis C₂₀-Arylrest, worin 1 oder 2 Kohlenstoffatome unabhängig voneinander durch O, S, N, N-(niedrig)-Alkyl oder N-Halogenid ersetzt sein können, insbesondere um Furyl, Thiophenyl, Oxazolyl, Thiazolyl, Pyridyl, Pyrimidinyl, Indolyl oder Benzofuranyl.

Unter Derivaten der Verbindungen der Formel VI sind insbesondere Salze zu verstehen, wie Verbindungen der Formeln VIa und Vlb.

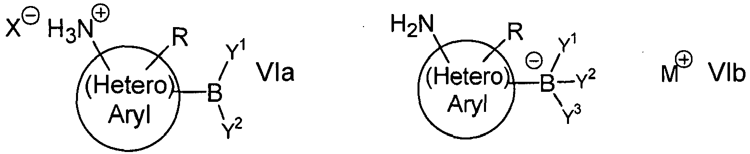

Als Verbindungen (II) kommen alle denkbaren Carbonylverbindungen in Frage, die nach Kondensation mit den Aminoaren- bzw. -heteroarenderivaten (I) Imine bilden, die ihrerseits unter den Bedingungen der Metallierung und Borylierung inert sind und sich ohne Verlust der borhaltigen Funktion aus (V) entfernen lassen. Verbindungen die diese Bedingung erfüllen sind insbesondere solche der Formel II, worin die Substituenten R' und R" die in den Ansprüchen angegebenen Bedeutungen haben.

Durch Einführung der Carbonylverbindung als Schutzgruppe durch Kondensation werden im Vorfeld die N-ständigen Wasserstoffatome vollständig entfernt bzw. maskiert, so dass die Aminfunktion im anschließenden Metallierungsschritt nicht mehr deprotoniert werden kann.

Die Bildung der geschützten Aminoarene bzw. -heteroarene (III) erfolgt beispielsweise durch Reaktion eines Aminoarens bzw. -heteroarens (I) mit einer Carbonylverbindung (II), wobei das entstehende Wasser entweder destillativ durch Ausbildung eines zweiphasigen Azeotrops oder durch Zugabe eines Wasser entziehenden Mittels aus dem Gleichgewicht entfernt wird, gegebenenfalls unter Mitwirkung einer anorganischen oder organischen, freien oder polymer gebundenen Säure oder einer Lewissäure. Vorzugsweise findet als polymer gebundene Säure ein saurer Kationentauscher und als Säure *p*-Toluolsulfonsäure und als Wasser entziehendes Mittel 4Å-Molsieb Verwendung. Als bevorzugte Carbonylverbindungen (II) werden dabei Benzophenon, substituierte Benzophenone, Acetophenon oder substituierte Acetophenone, aber auch andere sterisch gehinderte Ketone wie Di-tert.-butylketon oder substituierte tert.-Butylketone eingesetzt.

X ist bevorzugt Chlor, Brom oder lod. Im Falle der Metallierung durch Halogen-Metall-Austausch, beispielsweise mit Butyl-Lithium, ist Brom besonders bevorzugt; im Falle der Metallierung mit metallischem Lithium (Lithiierung) ist Chlor besonders bevorzugt. Als Metallierungsreagentien kommen beispielsweise Grignard-Verbindungen, Diorganomagnesiumverbindungen, Organolithiumverbindungen oder Triorganomagnesium-at-Komplexe in Betracht, sowie Alkalimetalldiorganoamide, Kombinationen aus Organolithiumverbindung und Komplexbildner, Kombinationen aus Organolithium-verbindung und Alkalimetallalkoholat, oder auch das reaktive Metall selbst, wie Alkali- und Erdalkalimetalle, insbesondere Natrium, Lithium, Magnesium oder auch Zink in geeigneter Form, gegebenenfalls in Gegenwart eines Redox-Katalysators.

Durch Metallierung von (III) werden Verbindungen der Formel IIIa erhalten, wobei M für ein gegebenenfalls Liganden [(X) in Formel IIIa bedeutet, dass eine oder mehrere Ligand(en) X an das Metall M gebunden/koordiniert sein können aber nicht müssen] tragendes Alkali- oder Erdalkalimetall, Zink oder Aluminium steht (vgl. GLEICHUNG 2).

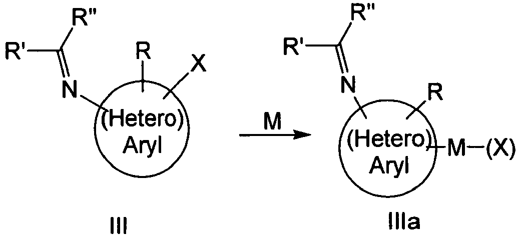

### GLEICHUNG 2

Als Metallierungsreagentien besonders bevorzugt sind sekundäre Grignard-Verbindungen wie Isopropyl-, Cyclohexyl- oder Cyclopentylmagnesiumhalogenide, und primäre oder sekundäre Alkyllithiumverbindungen wie Butyllithium, Hexyllithium oder Cyclohexyllithium oder metallisches Lithium in Gegenwart eines Katalysators.

Die so erhaltene metallierte Verbindung (IIIa) wird mit 0.6 bis 5 Stoffmengenäquivalenten, insbesondere 1.0 bis 2.0 Stoffmengenäquivalenten eines trisubstituierten Borats bzw. Borans (IV) 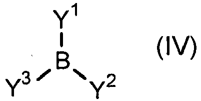 zu Verbindungen der Formel V umgesetzt. Die Reste Y¹⁻³ haben hierbei die in den Ansprüchen genannte Bedeutung. Im Falle Y¹⁻³ =Halogenid, entstehen Verbindungen der Formel V mit Y¹=Y²=H.

Bevorzugt sind die Reste Y¹⁻³ Alkoxyreste, wobei die Alkylteile insbesondere der Gruppe der linearen oder verzweigten Alkane und Cycloalkane, vor allem Methyl, Ethyl, Propyl, Butyl, Isopropyl, Isobutyl, tert.-Butyl, Pentyl, Isopentyl, Neopentyl, Cyclopentyl, Hexyl, Isohexyl, Cyclohexyl, Cycloheptyl, Cyclooctyl usw. entstammen.

Die anschließende Freisetzung der Aminfunktion durch Abspaltung der Schutzgruppe am Aminoaren- bzw. -heteroaren-Stickstoffatom, beispielsweise durch Hydrolyse oder in einem nachgelagerten Reaktionsschritt, führt zu den gewünschten Aminoaryl- bzw. -heteroarylboronsäurederivaten (VI).

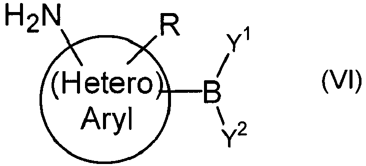

Zur Entfernung der Schutzgruppe kann eine beliebige, dem Fachmann bekannte, Methode eingesetzt werden, die die anderen im Molekül enthaltenen Funktionen unter den anzuwendenden Bedingungen nicht angreift; beispielsweise Hydrolyse mittels verdünnter oder konzentrierter anorganischer oder organischer, freier oder polymer gebundener Säuren oder durch Zugabe eines leichtflüchtigen Amins, das mit dem geschützten Aminoaren bzw. -heteroaren eine Austauschreaktion eingeht, bei der ebenfalls die Schutzgruppe am Aminoaren- bzw. -heteroaren-Stickstoffatom entfernt wird. Die Hydrolyse erfolgt vorzugsweise in einem wässrigen Milieu in einem Temperaturbereich von -20 bis +80 °C unter Normaldruck in Gegenwart von verdünnter Salz- oder Schwefelsäure, vorzugsweise bei Raumtemperatur und bereits während der Aufarbeitung oder in einem separaten Reaktionsschritt.

Das erfindungsgemäße Verfahren über alle Schritte wird in einem Lösemittel, bei Temperaturen im Bereich von -100 bis +120 °C, vorzugsweise im Bereich von -85 bis +40 °C durchgeführt. Die Temperatur liegt bei der Verwendung von Grignard-Verbindungen im Metallierungsschritt insbesondere im bevorzugten Bereich; bei der Verwendung von Organolithiumverbindungen vorzugsweise im Bereich von -100 bis -30 °C. Aufgrund der Feuchtigkeits- und Sauerstoffempfindlichkeit der metallorganischen Reagenzien und Intermediate wird die Reaktion bevorzugt unter einem trockenen Inertgas wie Stickstoff oder Argon durchgeführt.

Der Metallierungsschritt des erfindungsgemäßen Verfahrens wird in einem organischen Lösemittel oder Lösemittelgemischen durchgeführt, bevorzugt in einem aliphatischen, aromatischen oder etherischen Lösemittel oder Mischungen dieser Lösemittel, besonders bevorzugt in Lösemitteln oder Lösemittelgemischen, die mindestens ein Lösemittel ausgewählt aus der nachfolgenden Gruppe enthalten: Tetrahydrofuran, Glyme, Diglyme, Toluol, Cyclohexan, Pentan, Hexan, Isohexan oder Heptan, Triethylamin, Dialkylether, insbesondere Diethylether, Di-*n*-propylether, Diisopropylether, Dibutylether, 2-Methyltetrahydrofuran, *tert*.-Butylmethylether, Benzol, Xylol, Anisol, Petrolether (Alkangemische), Methylcyclohexan.

Schützungs- und Entschützungsschritt werden entweder in Substanz oder einem geeigneten Lösemittel, beispielsweise aus der Reihe der vorstehend genannten Lösemittel oder Lösemittelgemische durchgeführt.

In der bevorzugten Ausführungsform wird zunächst das Aminoaren bzw. -heteroaren (I) mit 1 bis 50 Äquivalenten, besonders bevorzugt mit 1 bis 2.2 Äquivalenten, einer Carbonylverbindung (II), in einem geeigneten Lösungsmittel, meist in Gegenwart von 0.01 bis 0.25 Äquivalenten einer geeigneten Säure oder Lewis-Säure umgesetzt und die geschützte Verbindung (III) isoliert.

In der bevorzugten Ausführungsform des zweiten Schrittes wird eine Grignard-Verbindung bei Raumtemperatur oder eine Alkyllithium-Verbindung bei tiefer Temperatur vorgelegt und die geschützte Verbindung (III) langsam zudosiert, welches dabei durch Halogen-Metall-Austausch metalliert wird. Danach wird die entstandene Suspension mit dem trisubstituierten Boran bzw. Borat (IV) versetzt und zweckmäßigerweise bis zur vollständigen Umsetzung gerührt, wobei gegebenenfalls die Temperatur erhöht wird. Ebenso kann die Verbindung (III) vorgelegt und die metallorganische Verbindung zudosiert werden.

In einer alternativen Ausführungsform als einschrittige Variante kann ein Triorganoborsäureester [Verbindung (IV) mit Y¹⁻³ = Alkoxy), der in diesem Fall bevorzugt sterisch anspruchsvolle Substituenten trägt, mit der geschützten Verbindung (III) vorgelegt und die Organometall-Verbindung zudosiert werden.

In einer weiteren alternativen Ausführungsform kann ein geschütztes Lithio- aminoaren bzw. -heteroaren ((IIIa), X nicht vorhanden) durch Deprotonierung eines Aminoarens bzw. -heteroarens (III) erzeugt werden, wozu im Allgemeinen als Base entweder eine Alkyl- oder Aryllithiumverbindung, ein Lithiumamid (z.B. Lithiumdiisopropylamid) oder eine Kombination aus Organolithium-Verbindung und Komplexbildner (z.B. Butyllithium und N,N,N',N'-Tetramethylethylendiamin) oder eine Kombination aus Organolithiumverbindung und Alkalimetall-Alkoholat (z.B. Butyllithium und Kalium-*tert*.-butanolat) zum Einsatz kommen. Auch in diesem Fall ist es sowohl möglich, die metallorganische Base vorzulegen, als auch die Verbindung (III) vorzulegen, als auch ein Gemisch von Verbindung (III) und (IV) vorzulegen.

In einer weiteren alternativen Ausführungsform wird die geschützte Verbindung (III) mit einem reaktiven Metall, insbesondere Lithium, Natrium oder Magnesium, gegebenenfalls in Gegenwart eines Katalysators, umgesetzt, um die reaktive metallierte Spezies zu erzeugen. Diese kann dann mit einer der beschriebenen Methoden mit der Borverbindung umgesetzt werden. Ebenso kann die direkte Metallierung von (III) in Gegenwart der Borverbindung erfolgen.

Die Aufarbeitung erfolgt im Allgemeinen unter den üblichen wässrigen Bedingungen, wobei (V) entweder als Boronsäureester, Boronsäure oder Boronsäureanhydrid anfällt. Die Abspaltung der Schutzgruppen, falls nicht während der Aufarbeitung des Boronsäurederivats bereits erfolgt, wird unter genau kontrollierten Bedingungen auf eine Weise durchgeführt, die mit den Funktionalitäten von (V), insbesondere der Boronatgruppe, verträglich ist, d.h. möglichst wenig zu Protodeborierung führt. Gegebenenfalls kann das erhaltene Aminoaryl- bzw. -heteroarylboronsäurederivat (VI) durch Umkristallisation weiter aufgereinigt werden oder als Salz, z.B. als Hydrochlorid, isoliert werden.

Sofern erforderlich, können die erhaltenen Aminoaren- bzw. -heteroarenboronsäurederivate (VI) in einem weiteren Schritt mit oder ohne zwischenzeitliche Isolierung von (VI) an der Boronsäuregruppe durch Ver- oder Umesterung, insbesondere durch mehrwertige Alkohole wie Glykol, 1,3-Dihydroxypropan oder Pinakol funktionalisiert werden. Bevorzugt erfolgt diese Funktionalisierung der Verbindungen (VI) in einem zweiphasigen System Wasser/organisches Lösemittel insbesondere bei einem pH-Wert im Bereich von 7 bis 14.

Ebenso gut können die erhaltenen Aminoaren- bzw. -heteroarenboronsäurederivate (VI) in einem weiteren Schritt mit oder ohne zwischenzeitliche Isolierung von (VI) an der Aminogruppe durch Alkylierung oder durch Amid- bzw. Carbamatbildung, insbesondere durch Reaktion mit Alkylhalogeniden, anorganischen oder organischen Säurehalogeniden oder-anhydriden oder organischen Dicarbonaten, insbesondere Di-*tert*.-butyl-dicarbonat (Boc-Anhydrid), funktionalisiert werden.

Die erhaltenen Aminoaryl- bzw. -heteroarylboronsäurederivate, insbesondere Aminophenylboronsäuren, -ester und -anhydride lassen sich problemlos in Suzuki-Kupplungen einsetzen. Das Verfahren bietet einen einfachen, kostengünstigen Weg zur Synthese dieser Verbindungen in guten Ausbeuten.

Ein Vorteil des erfindungsgemäßen Verfahrens ist die gute Zugänglichkeit von Aminoaryl- bzw. -heteroarylboronsäurederivaten der Formel VI, insbesondere von 4-Aminophenylboronsäurederivaten (den *para*-Verbindungen), die nach den bekannten Verfahren nicht zugänglich sind. Weitere Vorteile des erfindungsgemäßen Verfahrens sind darin zu sehen, dass die Einführung der Schutzgruppen keine teuren metallorganischen Basen wie z.B. Lithiumalkyle benötigt, und dass die geschützte Aminogruppe gegenüber der Metallierung des aromatischen Rings in einem weiten Temperaturbereich inert ist, so dass auf kryogenische Bedingungen häufig verzichtet werden kann.

Das erfindungsgemäße Verfahren wird durch die nachfolgenden Beispiele erläutert.

### Beispiele

### Beispiel 1: 3-Aminophenylboronsäurepinakolester durch Halogen-Metall-Austausch mittels n-Butylllithium an Benzhydryliden-(3-brom-phenyl)-amin

Ein Gemisch aus 208.9 g (1.22 mol) 3-Bromanilin, 211.8 g (1.16 mol) Benzophenon und 11.1 g (58.2 mmol) *p*-Toluolsulfonsäure in 1000 g Toluol wird 24 h lang unter Rückfluss zum Sieden erhitzt, wobei das entstehende Wasser entfernt wird. Ein etwaig angefallener Feststoff wird abfiltriert, das Filtrat wird destillativ von Toluol befreit. Der Rückstand wird durch langsame Zugabe von Methanol in der Kälte zur Kristallisation gebracht. Die Kristalle werden abgesaugt, mit Toluol gewaschen und im Vakuum getrocknet. Es handelt sich bei dem gebildeten Feststoff um das geschützte Amin, um Benzhydryliden-(3-brom-phenyl)-amin. Ausbeute: 313.9 g (0.933 mol, 77 %).

20.0 g (59.5 mmol) Benzhydryliden-(3-brom-phenyl)-amin werden in 147 g trockenem THF gelöst und auf -78 °C gekühlt. Bei dieser Temperatur erfolgt die langsame Zugabe von 17.8 g (65.5 mmol) 2.5 M *n*-Butyllithium-Lösung in Hexan. Die Mischung wird 60 min lang weitergerührt und dann auf -85 °C gekühlt. Es erfolgt die langsame Zugabe von 7.45 g (71.5 mmol) Trimethylborat. Man lässt die Mischung erneut 60 min lang nachrühren, lässt dann auf -10 °C erwärmen und gießt diese in eine vorher bereitete und mit 50 g Toluol überschichtete Lösung von 9.69 g 96 %iger Schwefelsäure in 133.4 g Wasser. Die Mischung wird eine Stunde lang intensiv gerührt. Nach erfolgter Phasentrennung wird die wässrige Phase mit 200 g frischem Toluol überschichtet und mit 8.45 g (71.5 mmol) Pinakol versetzt. Durch Zugabe von 55.5 g 10 %iger Natronlauge stellt man einen pH-Wert von ca. 8.5 ein. Die Mischung wird 12 h lang intensiv gerührt, danach erfolgt erneut eine Phasentrennung. Aus der organischen Phase wird bei 100-150 mbar ein Großteil des Lösemittels entfernt. Der Rückstand wird auf -5 °C abgekühlt. Der dabei anfallende Feststoff wird abgesaugt, gewaschen und im Vakuum getrocknet. Es handelt sich dabei um 3-Aminophenylboronsäurepinakolester in Form von farblosen Kristallen.
Ausbeute: 10.1 g (46.1 mmol, 77 %). Ausbeute über alle Stufen: 59 %.

### Beispiel 2: 2-Aminophenylboronsäurepinakolester durch Halogen-Metall-Austausch mittels n-Butyllithium an Benzhydryliden-(2-brom-phenyl)-amin

2-Bromanilin wird wie in Beispiel 1 für 3-Bromanilin beschrieben geschützt, umgesetzt und aufgearbeitet. Man erhält so 2-Aminophenylboronsäurepinakolester mit 56 % Ausbeute (über alle Stufen).

### Beispiel 3: [3-(4,4,5,5-Tetramethyl-[1,3,2]dioxaborolan-2-yl)-phenyl]-carbaminsäure-tert.-butylester durch Halogen-Metall-Austausch mittels n-Butyllithium an Benzhydryliden-(3-brom-phenyl)-amin

Die Synthese von 3-Aminophenylboronsäurepinakolester wird durchgeführt wie in Beispiel 1 beschrieben. Nach erfolgter Pinakolisierung und Phasentrennung wird die Mischung jedoch nicht eingeengt, sondern die zurückbleibende organische Phase wird azeotrop getrocknet. Der Rückstand wird mit 15.6 g (71.5 mmol) Di-*tert*.-butyl-dicarbonat (Boc-Anhydrid) versetzt und bei 80 °C 12 h lang gerührt. Danach erfolgt die Entfernung eines Großteils des Lösemittels durch Destillation und das Abkühlen der Mischung auf -5 °C. Dabei kristallisiert das Produkt in Form von farblosen Kristallen aus und kann mittels Filtration isoliert werden. Man erhält so 12.5 g (39.2 mmol, 85 %) [3-(4,4,5,5-Tetramethyl-[1,3,2]dioxaborolan-2-yl)-phenyl]-carbaminsäure-*tert*.-butylester.
Ausbeute über alle Stufen: 66 %.

### Beispiel 4: N-[3-(4,4,5,5-Tetramethyl-[1,3,2]dioxaborolan-2-yl)-phenyl]-acetamid durch Halogen-Metall-Austausch mittels n-Butyllithium an Benzhydryliden-(4-brom-phenyl)-amin

Die Synthese von 3-Aminophenylboronsäurepinakolester wird durchgeführt wie in Beispiel 1 beschrieben. Nach erfolgter Pinakolisierung und Phasentrennung wird die Mischung jedoch nicht eingeengt, sondern die zurückbleibende organische Phase wird azeotrop getrocknet. Der Rückstand wird mit 7.3 g (71.5 mmol) Essigsäureanhydrid versetzt und bei 80 °C 12 h lang gerührt. Danach erfolgt die Entfernung eines Großteils des Lösemittels durch Destillation und das Abkühlen der Mischung auf -5 °C. Dabei kristallisiert das Produkt in Form von farblosen Kristallen aus und kann mittels Filtration isoliert werden. Man erhält so 9.37 g (35.9 mmol, 78 %) *N*-[3-(4,4,5,5-Tetramethyl-[1,3,2]dioxaborolan-2-yl)-phenyl]-acetamid.
Ausbeute über alle Stufen: 60 %.

### Beispiel 5: N-[3-(4,4,5,5-Tetramethyl-[1,3,2]dioxaborolan-2-yl)-phenyl]-methansulfonamid durch Halogen-Metall-Austausch mittels n-Butyllithium an Benzhydryliden-(4-brom-phenyl)-amin

Die Synthese von 3-Aminophenylboronsäurepinakolester wird durchgeführt wie in Beispiel 1 beschrieben. Nach erfolgter Pinakolisierung und Phasentrennung wird die Mischung jedoch nicht eingeengt, sondern die zurückbleibende organische Phase wird azeotrop getrocknet. Der Rückstand wird mit 8.2 g (71.5 mmol) Methansulfonylchlorid versetzt und bei 80 °C 12 h lang gerührt. Danach erfolgt die Entfernung eines Großteils des Lösemittels durch Destillation und das Abkühlen der Mischung auf -5 °C. Dabei kristallisiert das Produkt in Form von farblosen Kristallen aus und kann mittels Filtration isoliert werden. Man erhält so 10.9 g (36.6 mmol, 79 %) N-[3-(4,4,5,5-Tetramethyl-[1,3,2]dioxaborolan-2-yl)-phenyl]-methansulfonamid.
Ausbeute über alle Stufen: 62 %.

### Beispiel 6: 4-Amino-3-methoxy-phenylboronsäurepinakolester durch Halogen-Metall-Austausch mittels n-Butyllithium an Benzhydryliden-(4-brom-2-methoxy-phenyl)-amin

Ein Gemisch aus 246.6 g (1.22 mol) 4-Brom-2-methoxyanilin, 211.8 g (1.16 mol) Benzophenon und 11.1 g (58.2 mmol) p-Toluolsulfonsäure in 1000 g Toluol wird 24 h lang unter Rückfluss zum Sieden erhitzt, wobei das entstehende Wasser entfernt wird. Ein etwaig angefallener Feststoff wird abfiltriert, das Filtrat wird destillativ von Toluol befreit. Der Rückstand wird durch langsame Zugabe von Methanol in der Kälte zur Kristallisation gebracht. Die Kristalle werden abgesaugt, mit Toluol gewaschen und im Vakuum getrocknet. Es handelt sich bei dem gebildeten Feststoff um das geschützte Amin, um Benzhydryliden-(4-brom-2-methoxy-phenyl)-amin.
Ausbeute: 305.9 g (0.835 mol, 72 %).

25.0 g (68.3 mmol) Benzhydryliden-(4-bromo-2-methoxy-phenyl)-amin werden in 170 g trockenem THF gelöst und auf -78 °C gekühlt. Bei dieser Temperatur erfolgt die langsame Zugabe von 20.4 g (75.1 mmol) 2.5 M *n*-Butyllithium-Lösung in Hexan. Die Mischung wird 60 min lang weitergerührt und dann auf -85 °C gekühlt. Es erfolgt die langsame Zugabe von 8.55 g (82.0 mmol) Trimethylborat. Man lässt die Mischung erneut 60 min lang nachrühren, lässt dann auf -10 °C erwärmen und gießt diese in eine vorher bereitete und mit 60 g Toluol überschichtete Lösung von 11.1 g 96 %iger Schwefelsäure in 153 g Wasser. Die Mischung wird eine Stunde lang intensiv gerührt. Nach erfolgter Phasentrennung wird die wässrige Phase mit 230 g frischem Toluol überschichtet und mit 9.69 g (82.0 mmol) Pinakol versetzt. Durch Zugabe von 63.7 g 10 %iger Natronlauge stellt man einen pH-Wert von ca. 8.5 ein. Die Mischung wird 12 h lang intensiv gerührt, danach erfolgt erneut eine Phasentrennung. Aus der organischen Phase wird bei 100-150 mbar ein Großteil des Lösemittels entfernt. Der Rückstand wird auf -5 °C abgekühlt. Der dabei anfallende Feststoff wird abgesaugt, gewaschen und im Vakuum getrocknet. Es handelt sich dabei um 4-Aminophenylboronsäurepinakolester in Form von farblosen Kristallen.
Ausbeute: 11.7 g (47.1 mmol, 69 %).
Ausbeute über alle Stufen: 50 %.

### Beispiel 7: [2-Methoxy-4-(4,4,5,5-tetramethyl-[1,3,2]dioxaborolan-2-yl)-phenyl]-carbaminsäure-tert..-butylester durch Halogen-Metall-Austausch mittels n-Butyllithium an Benzhydryliden-(4-brom-2-methoxy-phenyl)-amin

Die Synthese von 4-Amino-3-methoxy-phenylboronsäurepinakolester wird durchgeführt wie in Beispiel 7 beschrieben. Nach erfolgter Pinakolisierung und Phasentrennung wird die Mischung jedoch nicht eingeengt, sondern die zurückbleibende organische Phase wird azeotrop getrocknet. Der Rückstand wird mit 17.9 g (82.0 mmol) Di-*tert*.-butyl-dicarbonat (Boc-Anhydrid) versetzt und bei 80 °C 12 h lang gerührt. Danach erfolgt die Entfernung eines Großteils des Lösemittels durch Destillation und das Abkühlen der Mischung auf -5 °C. Dabei kristallisiert das Produkt in Form von farblosen Kristallen aus und kann mittels Filtration isoliert werden. Man erhält so 10.5 g (30.1 mmol, 64 %) [2-Methoxy-4-(4,4,5,5-tetramethyl-[1,3,2]dioxaborolan-2-yl)-phenyl]-carbaminsäure-*tert*.-butylester.
Ausbeute über alle Stufen: 44 %.

### Beispiel 8: (2-Amino-pyrimidin-5-yl)-boronsäurepinakolester durch Halogen-Metall-Austausch mittels n-Butylllithium an 5-Brom-pyrimidin-2-ylamin

Ein Gemisch aus 212.3 g (1.22 mol) 5-Brom-pyrimidin-2-ylamin, 211.8 g (1.16 mol) Benzophenon und 11.1 g (58.2 mmol) p-Toluolsulfonsäure in 1000 g Toluol wird 24 h lang unter Rückfluss zum Sieden erhitzt, wobei das entstehende Wasser entfernt wird. Ein etwaig angefallener Feststoff wird abfiltriert, das Filtrat wird destillativ von Toluol befreit. Der Rückstand wird durch langsame Zugabe von Methanol in der Kälte zur Kristallisation gebracht. Die Kristalle werden abgesaugt, mit Toluol gewaschen und im Vakuum getrocknet. Es handelt sich bei dem gebildeten Feststoff um das geschützte Amin, um Benzhydryliden-(5-Brom-pyrimidin-2-yl)-amin.
Ausbeute: 286.5 g (0.847 mol, 73 %).

25.0 g (73.9 mmol) Benzhydryliden-(5-Brom-pyrimidin-2-yl)-amin werden in 185 g trockenem THF gelöst und auf -78 °C gekühlt. Bei dieser Temperatur erfolgt die langsame Zugabe von 22.1 g (81.3 mmol) 2.5 M *n*-Butyllithium-Lösung in Hexan. Die Mischung wird 60 min lang weitergerührt und dann auf -85 °C gekühlt. Es erfolgt die langsame Zugabe von 9.25 g (88.7 mmol) Trimethylborat. Man lässt die Mischung erneut 60 min lang nachrühren, lässt dann auf -10 °C erwärmen und gießt diese in eine vorher bereitete und mit 65 g Toluol überschichtete Lösung von 12.0 g 96 %iger Schwefelsäure in 166 g Wasser. Die Mischung wird eine Stunde lang intensiv gerührt. Nach erfolgter Phasentrennung wird die wässrige Phase mit 249 g frischem Toluol überschichtet und mit 10.5 g (88.7 mmol) Pinakol versetzt. Durch Zugabe von 68.9 g 10 %iger Natronlauge stellt man einen pH-Wert von ca. 8.5 ein. Die Mischung wird 12 h lang intensiv gerührt, danach erfolgt erneut eine Phasentrennung. Aus der organischen Phase wird bei 100-150 mbar ein Großteil des Lösemittels entfernt. Der Rückstand wird auf -5 °C abgekühlt. Der dabei anfallende Feststoff wird abgesaugt, gewaschen und im Vakuum getrocknet. Es handelt sich dabei um (2-Amino-pyrimidin-5-yl)-boronsäurepinakolester in Form von farblosen Kristallen.
Ausbeute: 12.1 g (54.7 mmol, 74 %).
Ausbeute über alle Stufen: 54 %.

### Beispiel 9: [5-(4,4,5,5-Tetramethyl-[1,3,2]dioxaborolan-2-yl)-pyrimidin-2-yl]-carbaminsäure-tert.-butylester durch Halogen-Metall-Austausch mittels n-Butyllithium an Benzhydryliden-(5-brom-pyrimidin-2-yl)-amin

Die Synthese von (2-Amino-pyrimidin-5-yl)-boronsäurepinakolesterwird durchgeführt wie in Beispiel 8 beschrieben. Nach erfolgter Pinakolisierung und Phasentrennung wird die Mischung jedoch nicht eingeengt, sondern die zurückbleibende organische Phase wird azeotrop getrocknet. Der Rückstand wird mit 19.4 g (88.7 mmol) Di-*tert*.-butyl-dicarbonat (Boc-Anhydrid) versetzt und bei 80 °C 12 h lang gerührt. Danach erfolgt die Entfernung eines Großteils des Lösemittels durch Destillation und das Abkühlen der Mischung auf -5 °C. Dabei kristallisiert das Produkt in Form von farblosen Kristallen aus und kann mittels Filtration isoliert werden. Man erhält so 12.5 g (38.8 mmol, 71 %) [5-(4,4,5,5-Tetramethyl-[1,3,2]dioxaborolan-2-yl)-pyrimidin-2-yl]-carbaminsäure-*tert*.-butylester.
Ausbeute über alle Stufen: 38 %.

### Beispiel 10: 3-Aminophenylboronsäurepinakolester durch Halogen-Metall-Austausch mittels Isopropylmagnesiumbromid an Benzhydryliden-(3-brom-phenyl)-amin

Die Synthese und Isolierung von Benzhydryliden-(3-brom-phenyl)-amin wird wie im Beispiel 1 beschrieben durchgeführt.

20.0 g (59.5 mmol) Benzhydryliden-(3-brom-phenyl)-amin werden in 147 g trockenem THF gelöst und auf -20 °C gekühlt. Bei dieser Temperatur erfolgt die langsame Zugabe von 9.65 g (65.5 mmol) Isopropylmagnesiumbromid, gelöst in 100 g trockenem THF. Die Mischung wird 60 min lang weitergerührt. Es erfolgt die langsame Zugabe von 7.45 g (71.5 mmol) Trimethylborat. Man lässt die Mischung erneut 60 min lang nachrühren, lässt dann auf -10 °C erwärmen und gießt diese in eine vorher bereitete und mit 50 g Toluol überschichtete Lösung von 11.6 g 96 %iger Schwefelsäure in 160.1 g Wasser. Die Mischung wird eine Stunde lang intensiv gerührt. Nach erfolgter Phasentrennung wird die wässrige Phase mit 200 g frischem Toluol überschichtet und mit 8.45 g (71.5 mmol) Pinakol versetzt. Durch Zugabe von 66.9 g 10 %iger Natronlauge stellt man einen pH-Wert von ca. 8.5 ein. Die Mischung wird 12 h lang intensiv gerührt, danach erfolgt erneut eine Phasentrennung. Aus der organischen Phase wird bei 100 -150 mbar ein Großteil des Lösemittels entfernt. Der Rückstand wird auf -5 °C abgekühlt. Der dabei anfallende Feststoff wird abgesaugt, gewaschen und im Vakuum getrocknet. Es handelt sich dabei um 3-Amino-phenylboronsäurepinakolester in Form von farblosen Kristallen.
Ausbeute: 9.21 g (42.0 mmol, 70 %).
Ausbeute über alle Stufen: 54 %.

## Patentansprüche

1. Verfahren zur Herstellung von Aminoaryl- bzw. -heteroarylboronsäurederivaten der Formel VI, 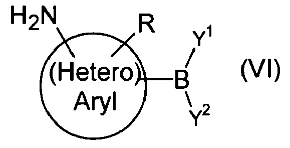 durch Überführung eines Aminoarens oder -heteroarens (I) 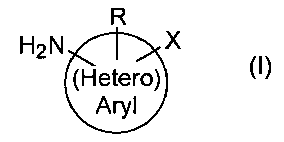 mit einer Carbonylverbindung (II) 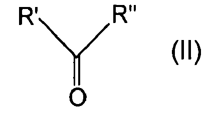 in ein geschütztes Aminoaren bzw. -heteroaren (III) 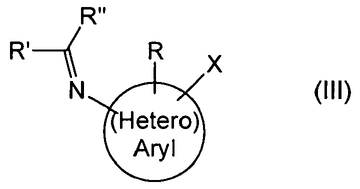 Metallierung von (III) mit gleichzeitiger oder anschließender Umsetzung mit einer Borverbindung (IV) 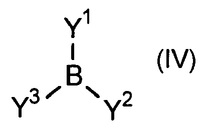 zu einer geschützten Aminoaryl- bzw. -heteroaryl-borverbindung der Formel V, 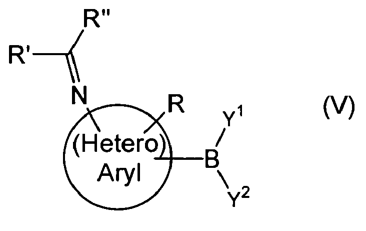 die durch Abspaltung der Schutzgruppe in die Aminoaryl- bzw. -heteroarylborverbindung der Formel VI 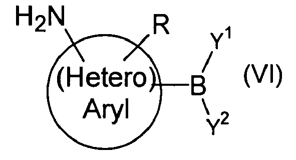 überführt wird, wobei
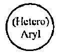 für mono-, di-, tri- oder polycyclisches C₅- bis C₂₀-Aryl steht, worin 1 oder 2 Kohlenstoffatome unabhängig voneinander durch O, N oder N-R ersetzt sein können, bevorzugt Phenyl oder Pyrimidin
R für
H, F, Cl, Br, I,
C₁- bis C₂₀-, bevorzugt C₁- bis C₈-Alkyl oder
C₁- bis C₂₀-, insbesondere C₁- bis C₈-Alkoxy,
wobei diese Alkyl- und Alkoxyreste verzweigt oder unverzweigt sind und entweder nicht oder einfach oder mehrfach substituiert sind,
C₆- bis C₁₂-Aryl, insbesondere Phenyl,
C₆- bis C₁₂-Aryloxy,
Heteroaryl,
Heteroaryloxy,
C₃- bis C₈-Cycloalkyl, insbesondere Cyclohexyl,
wobei diese Aryl-, Aryloxy-, Heteroaryl-, Heteroaryloxy- und Cycloalkylreste entweder nicht oder einfach oder mehrfach substituiert sind,
verzweigtes oder unverzweigtes Di-(C₁-C₆)-alkylamino,
Diarylamino,
verzweigtes oder unverzweigtes (C₁-C₆)-Alkylthio, Arylthio,
verzweigtes oder unverzweigtes (C₁-C₆)-Alkyloxycarbonyl oder verzweigtes oder unverzweigtes Di-(C₁-C₆)-alkyloxymethylen steht;
R' und R" unabhängig voneinander eine jeweils nicht oder ein- oder mehrfach substituierte
verzweigte oder unverzweigte (C₁-C₆)-Alkyl-, Aryl-, Heteroaryl-, Benzyl-, Benzyloxycarbonyl-, insbesondere Phenyl- und substituierte Phenylgruppe darstellt, wobei
R' und R" auch gemeinsam mit dem C-Atom an das sie gebunden sind einen nicht oder ein- oder mehrfach substituierten Cyclus, bevorzugt einen 5- bis 7-gliedrigen Cyclus, insbesondere ein C₅- bis C₇-Cycloalkyl bilden können;
X bedeutet H, F, Cl, Br, oder I, insbesondere Cl, Br oder I;
Y¹, Y², Y³ stehen unabhängig voneinander für
H, F, Cl, Br, oder I, insbesondere Cl
C₁-C₂₀-Alkyloxy, insbesondere C₁-C₈-Alkyloxy, welches verzweigt oder unverzweigt ist und entweder nicht oder einfach oder mehrfach substituiert ist
oder zwei Reste Y¹⁻³ bilden zusammen einen Ring; und wobei "ein- oder mehrfach substituiert" oder "substituiert" bedeutet, dass der jeweilige Rest ein-, oder sofern möglich, zwei-, drei- oder mehrfach durch
Halogen, bevorzugt Chlor oder Brom, und/oder durch Nitro, Cyano, Hydroxy, verzweigtes oder unverzweigtes (C₁-C₆)-Alkyl, verzweigtes oder unverzweigtes (C₁-C₆)-Alkyloxy, Amino, verzweigtes oder unverzweigtes Mono-(C₁-C₆)-alkylamino, verzweigtes oder unverzweigtes Di-(C₁-C₆)-alkylamino, Monoarylamino, Diarylamino, verzweigtes oder unverzweigtes (C₁-C₆)-Alkylthio, Arylthio, Carboxyl und/oder verzweigtes oder unverzweigtes (C₁-C₆)-Alkyloxycarbonyl substituiert ist.

2. Verfahren nach Anspruch 1, **dadurch gekennzeichnet, dass**
R' und R" unabhängig voneinander eine jeweils unsubstituierte oder ein- oder mehrfach substituierte
verzweigte oder unverzweigte (C₁-C₆)-Alkyl-, Aryl-, Heteroaryl-, Benzyl-, Benzyloxycarbonyl-, insbesondere Phenyl- und substituierte Phenylgruppe darstellt,
oder wobei
R' und R" gemeinsam mit dem C-Atom an das sie gebunden sind einen unsubstituierten oder ein- oder mehrfach substituierten Cyclus, bevorzugt einen 5- bis 7-gliedrigen Cyclus, insbesondere ein C₅- bis C₇-Cycloalkyl bilden.

3. Verfahren nach Anspruch 2, **dadurch gekennzeichnet, dass** R' unsubstituiertes oder ein- oder mehrfach substituiertes Phenyl, Methyl oder tert.-Butyl ist und R" unsubstituiertes oder ein- oder mehrfach substituiertes Phenyl oder tert.-Butyl ist.

4. Verfahren nach einem der Ansprüche 1 bis 3, **dadurch gekennzeichnet, dass** die Reaktion von (I) mit der Carbonylverbindung (II)
in Anwesenheit einer anorganischen oder organischen, freien oder polymergebundenen Säure oder Lewissäure, insbesondere p-Toluolsulfonsäure oder einem sauren Kationentauscher, stattfindet
und/oder
unter Entfernung des gebildeten Wassers durch azeotrope Destillation oder
durch Zugabe eines wasserentziehenden Mittels, insbesondere 4Å-Molsieb, erfolgt.

5. Verfahren nach einem der Ansprüche 1 bis 4, **dadurch gekennzeichnet, dass** die Verbindung (III) in eine metallierte Verbindung (IIIa) 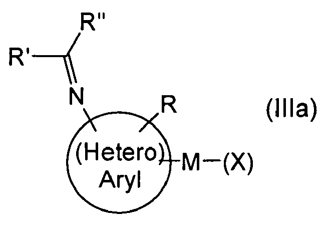 überführt wird, wobei M für ein Alkali- oder Erdalkalimetall, Zink oder Aluminium steht.

6. Verfahren nach Anspruch 5, **dadurch gekennzeichnet, dass** das geschützte Aminoaren- bzw. -heteroarenderivat (III) mit einer Organomagnesium- oder Organolithiumverbindung in das metallierte geschützte Aminoaren- bzw. - heteroarenderivat (IIIa) überführt wird.

7. Verfahren nach Anspruch 5 oder 6, **dadurch gekennzeichnet, dass** die Metallierung unter Mitwirkung eines Redox-Katalysators, in An- oder Abwesenheit eines Lösemittels erfolgt.

8. Verfahren nach einem der Ansprüche 1 bis 7, **dadurch gekennzeichnet, dass** das Metallierungsmittel vorgelegt, dann das geschützte Aminoaren- bzw. -heteroaren (III) zum Metallierungsmittel zudosiert, und anschließend mit dem trisubstituierten Boran bzw. Borat (IV), gelöst oder nicht gelöst in einem Lösemittel, zur Reaktion gebracht wird.

9. Verfahren nach einem der Ansprüche 1 bis 7, **dadurch gekennzeichnet, dass** das Metallierungsmittel in einem Lösemittel vorgelegt wird und die geschützte Aminoaren- bzw. -heteroarenverbindung (III) und das trisubstituierte Boran bzw. Borat (IV), eines oder beides gelöst oder nicht gelöst in einem Lösemittel, parallel oder als Gemisch zudosiert werden.

10. Verfahren nach einem der Ansprüche 1 bis 7, **dadurch gekennzeichnet, dass** die geschützte Aminoaren- bzw. -heteroarenverbindung (III) vorgelegt wird und dann das Metallierungsmittel, gelöst oder nicht gelöst in einem Lösemittel, zudosiert wird, und abschließend das trisubstituierte Boran bzw. Borat (IV), gelöst oder nicht gelöst in einem Lösemittel, mit dem Reaktionsgemisch zur Reaktion gebracht wird.

11. Verfahren nach einem der Ansprüche 1 bis 7, **dadurch gekennzeichnet, dass** die geschützte Aminoaren- bzw.-heteroarenverbindung (III) und das trisubstituierte Boran bzw. Borat (IV) vorgelegt werden und das Metallierungsmittel, gelöst oder nicht gelöst in einem Lösemittel, zudosiert wird.

12. Verfahren nach einem der Ansprüche 1 bis 11, **dadurch gekennzeichnet, dass** die erhaltenen Aminoaren- bzw. -heteroarenboronsäurederivate (VI) in einem weiteren Schritt mit oder ohne zwischenzeitliche Isolierung von (VI) an der Aminogruppe durch Alkylierung oder durch Amid- bzw. Carbamatbildung, insbesondere durch Reaktion mit Alkylhalogeniden, anorganischen oder organischen Säurehalogeniden oder -anhydriden oder organischen Dicarbonaten, insbesondere Di-*tert*.-butyl-dicarbonat (Boc-Anhydrid), funktionalisiert werden.

## Claims

1. Method for manufacturing aminoaryl or heteroarylboronic acid derivatives of formula VI, 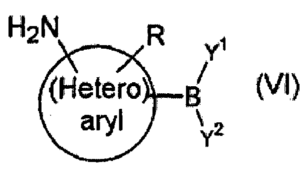 by converting an aminoarene or aminoheteroarene (I) 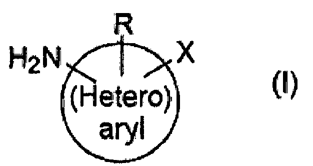 with a carbonyl compound (II) 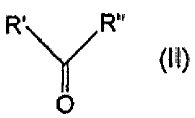 into a protected aminoarene or aminoheteroarene (III) 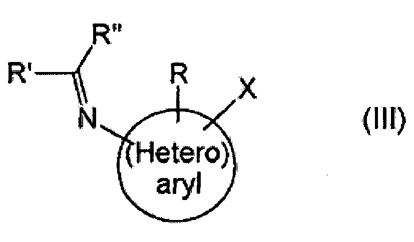 metalation of (III) with simultaneous or subsequent reaction with a boron compound (IV) 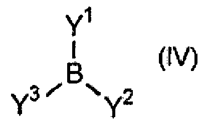 to give a protected aminoaryl or aminoheteroarylboron compound of formula V 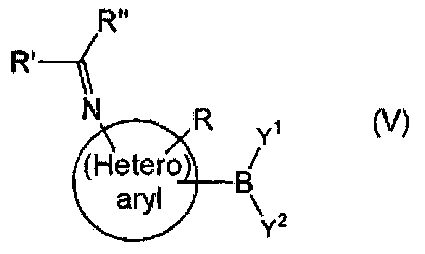 which is converted to the aminoaryl or aminoheteroarylboron compound of formula VI by cleavage of the protecting group 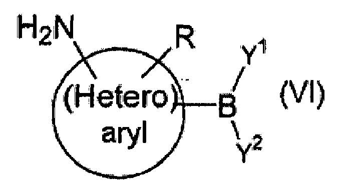 where,
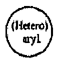 is mono-, di-, tri- or polysubstituted C₅- to C₂₀-aryl, wherein 1 or 2 carbon atoms may be mutually independently replaced by O, N or N-R, preferably phenyl or pyrimidine
R is
H, F, Cl, Br, I,
C₁- to C₂₀-, preferably C₁- to C₈-alkyl or C₁-to C₂₀-, particularly C₁- to C₈-alkoxy,
wherein said alkyl or alkoxy residues are branched or unbranched and are either unsubstituted or mono- or polysubstituted, C₆- to C₁₂-aryl, particularly phenyl, C₆- to C₁₂-aryloxy, heteroaryl, heteroaryloxy,
C₃- to C₈-cycloalkyl, particularly cyclohexyl,
wherein said aryl, aryloxy, heteroaryl, heteroaryloxy and cycloalkyl residues are either unsubstituted or mono- or polysubstituted,
branched or unbranched di-(C₁-C₆)-alkylamino, diarylamino,
branched or unbranched (C₁-C₆)-alkylthio, arylthio,
branched or unbranched (C₁-C₆)-alkyloxycarbonyl or branched or unbranched di-(C₁-C₆)-alkyloxymethylene;
R' and R" each mutually independently represents an unsubstituted or mono- or polysubstituted branched or unbranched (C₁-C₆)-alkyl, aryl, heteroaryl, benzyl, benzyloxycarbonyl, particularly phenyl and substituted phenyl group
R' and R" together with the carbon atom to which they are attached may also form an unsubstituted or mono- or polysubstituted ring, preferably a 5- to 7-membered ring, in particular, a C₅- to C₇-cycloalkyl;
X is
H, F, Cl, Br or I, particularly Cl, Br or I;
Y¹, Y², Y³ are mutually independently H, F, Cl, Br or I, particularly Cl C₁-C₂₀-alkyloxy, particularly C₁-C₈-alkyloxy, which is branched or unbranched and is either unsubstituted or mono- or polysubstituted or two residues Y¹⁻³ together form a ring; and wherein
"mono- or polysubstituted" or "substituted" signifies that the respective residue is mono-, or where possible, di-, tri- or polysubstituted by halogen, preferably chlorine or bromine, and/or by nitro, cyano, hydroxyl, branched or unbranched (C₁-C₆)-alkyl, branched or unbranched (C₁-C₆)-alkyloxy, amino, branched or unbranched mono-(C₁-C₆)-alkylamino, branched or unbranched di-(C₁-C₆)-alkylamino, monoarylamino, diarylamino, branched or unbranched (C₁-C₆)-alkylthio, arylthio, carboxyl and/or branched or unbranched (C₁-C₆)-alkyloxycarbonyl.

2. Method according to Claim 1, **characterized in that**
R' and R" each mutually independently represents an unsubstituted or mono- or polysubstituted branched or unbranched (C₁-C₆)-alkyl, aryl, heteroaryl, benzyl, benzyloxycarbonyl, particularly phenyl and substituted phenyl group
or where
R' and R" together with the carbon atom to which they are attached form an unsubstituted or mono- or polysubstituted ring, preferably a 5- to 7-membered ring, in particular, a C₅- to C₇-cycloalkyl.

3. Method according to Claim 2, **characterized in that**, R' is unsubstituted or mono- or polysubstituted phenyl, methyl or tert-butyl and R" is unsubstituted or mono- or polysubstituted phenyl or tert-butyl.

4. Method according to any of Claims 1 to 3, **characterized in that** the reaction of (I) with the carbonyl compound (II) takes place in the presence of an inorganic or organic, free or polymer-bound acid or Lewis acid, in particular, p-toluenesulphonic acid or an acidic cation exchanger
and/or
is effected by removing water formed by azeotropic distillation or by adding a drying agent, in particular 4Å molecular sieve.

5. Method according to any of Claims 1 to 4, **characterized in that** compound (III) is converted into a metalated compound (IIIa) 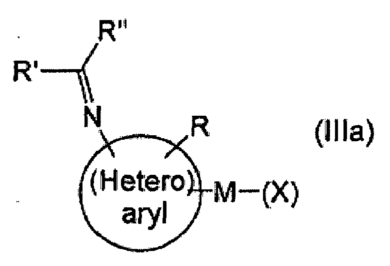 where M is an alkali metal or alkaline earth metal, zinc or aluminium.

6. Method according to Claim 5, **characterized in that** the protected aminoarene or aminoheteroarene derivative (III) is converted with an organomagnesium or organolithium compound into the metalated protected aminoarene or aminoheteroarene derivative (IIIa).

7. Method according to Claim 5 or 6, **characterized in that** the metalation is carried out with the assistance of a redox catalyst in the presence or absence of a solvent.

8. Method according to any of Claims 1 to 7, **characterized in that** the metalating agent is initially charged, the protected aminoarene or aminoheteroarene (111) is then metered in to the metalating agent and is subsequently reacted with the trisubstituted borane or borate (IV), optionally dissolved in a solvent.

9. Method according to any of Claims 1 to 7, **characterized in that** the metalating agent is initially charged in a solvent and the protected aminoarene or aminoheteroarene compound (III) and the trisubstituted borane or borate (IV) are metered in in parallel or as a mixture, one or both optionally dissolved in a solvent.

10. Method according to any of Claims 1 to 7, **characterized in that** the protected aminoarene or aminoheteroarene compound (III) is initially charged and then the metalating agent, optionally dissolved in a solvent, is metered in and finally the trisubstituted borane or borate (IV), optionally dissolved in a solvent, is reacted with the reaction mixture.

11. Method according to any of Claims 1 to 7, **characterized in that** the protected aminoarene or aminoheteroarene compound (III) and the trisubstituted borane or borate (IV) are initially charged and the metalating agent, optionally dissolved in a solvent, is metered in.

12. Method according to any of Claims 1 to 11, **characterized in that** the resulting aminoarene or aminoheteroareneboronic acid derivatives (VI) are functionalized on the amino group in a further step, with or without intermediate isolation of (VI), by alkylation or by amide or carbamate formation, particularly by reaction with alkyl halides, inorganic or organic acid halides or acid anhydrides or organic dicarbonates, particularly di-*tert*-butyl dicarbonate (Boc anhydride).

## Revendications

1. Procédé de fabrication de dérivés d'acide de bore aminoaryle ou hétéroaryle de formule (VI) : 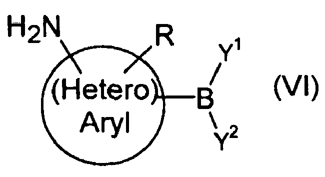 par transformation d'un aminoarène ou d'un aminohétéroarène (I) : 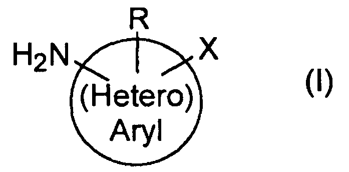 avec un composé de carbonyle (II) : 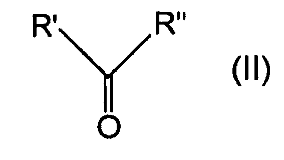 en un aminoarène ou aminohétéroarène protégé (III) : 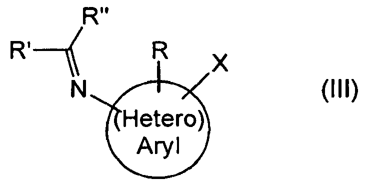 métallisation de (III) par réaction simultanée ou consécutive avec un composé de bore (IV) : 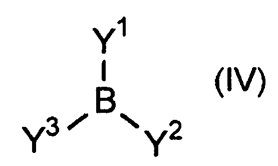 pour obtenir un composé de bore aminoaryle ou aminohétéroaryle protégé de formule (V) : 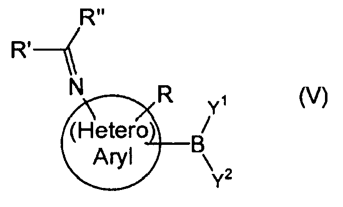 qui est converti par séparation du groupement protecteur en un composé de bore aminoaryle ou aminohétéroaryle de formule (VI) : 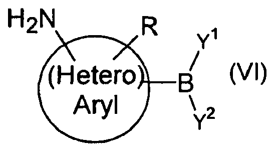 dans laquelle : 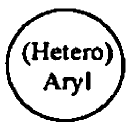 désigne un groupement aryle en C₅-C₂₀ mono-, di-, tri- ou polycyclique, dans lequel un ou deux atomes de carbone peut ou peuvent être, indépendamment l'un de l'autre, remplacés par O, N ou N-R, de préférence un groupement phényle ou pyrimidine,
R désigne :
H, F, Cl, Br, I,
un groupement alkyle en C₁-C₂₀, de préférence en C₁-C₈ ou
un groupement alcoxy en C₁-C₂₀, en particulier en C₁-C₈,
dans lequel ces radicaux alkyle et alcoxy sont ramifiés ou non ramifiés et ne sont pas substitués ou le sont de manière unique ou multiple,
un groupement aryle en C₆-C₁₂, en particulier un groupement phényle,
un groupement aryloxy en C₆-C₁₂,
un groupement hétéroaryle,
un groupement hétéroaryloxy,
un groupement cycloalkyle en C₃-C₈, en particulier un groupement cyclohexyle,
dans lequel ces radicaux aryle, aryloxy, hétéroaryle, hétéroaryloxy et cycloalkyle ne sont pas substitués ou le sont de manière unique ou multiple,
un groupement dialkylamino en C₁-C₆ ramifié ou non ramifié,
un groupement diarylamino,
un groupement alkylthio en C₁-C₆ ramifié ou non ramifié,
un groupement arylthio,
un groupement alkyloxycarbonyle en C₁-C₆ ramifié ou non ramifié ou
un groupement dialcoxyméthylène en C₁-C₆ ramifié ou non ramifié ;
R' et R" représentent, indépendamment l'un de l'autre, un groupement alkyle en C₁-C₆, aryle, hétéroaryle, benzyle, benzyloxycarbonyle, ramifiés ou non ramifiés respectivement non substitués ou substitués de manière unique ou multiple, en particulier un groupement phényle et un groupement phényle substitué, dans lequel :
R' et R" peuvent former également, conjointement avec l'atome de carbone auquel ils sont liés, un cycle non substitué ou substitué de manière unique ou multiple, de préférence un cycle à 5 à 7 chaînons, en particulier un groupement cycloalkyle en C₅-C₇,
X désigne :
H, F, Cl, Br ou I, en particulier Cl, Br ou I ;
Y¹, Y², Y³ désignent indépendamment l'un de l'autre :
H, F, Cl, Br ou I, en particulier Cl,
un groupement alkyloxy en C₁-C₂₀, en particulier un groupement alkyloxy en C₁-C₈, qui est ramifié ou non ramifié et qui n'est pas substitué ou l'est de manière unique ou multiple, ou
deux radicaux Y¹⁻³ forment conjointement un noyau ; et dans lequel :
les expressions « substitué de manière unique ou multiple » ou « substitué » signifient que le radical respectif est substitué de manière unique ou, dans la mesure du possible, l'est deux fois, trois fois ou plusieurs fois par un halogène, de préférence du chlore ou du brome, et/ou un groupement nitro, cyano, hydroxy, un groupement alkyle en C₁-C₆ ramifié ou non ramifié, un groupement alkyloxy en C₁-C₆ ramifié ou non ramifié, un groupement amino, un groupement monoalkylamino en C₁-C₆ ramifié ou non ramifié, un groupement dialkylamino en C₁-C₆ ramifié ou non ramifié, un groupement monoarylamino, diarylamino, un groupement alkylthio en C₁-C₆ ramifié ou non ramifié, un groupement arylthio, carboxyle et/ou un groupement alkyloxycarbonyle en C₁-C₆ ramifié ou non ramifié.

2. Procédé selon la revendication 1, **caractérisé en ce que** :
R' et R" représentent, indépendamment l'un de l'autre, un groupement alkyle en C₁-C₆, aryle, hétéroaryle, benzyle, benzyloxycarbonyle respectivement non substitués ou substitués de manière unique ou multiple, en particulier un groupement phényle et un groupement phényle substitué,
ou dans lequel :
R' et R" forment, conjointement avec l'atome de carbone auquel ils sont liés, un cycle non substitué ou substitué de manière unique ou multiple, de préférence un cycle à 5 à 7 chaînons, en particulier un groupement cycloalkyle en C₅-C₇.

3. Procédé selon la revendication 2, **caractérisé en ce que** R' est un groupement phényle, méthyle ou tert-butyle non substitué ou substitué de manière unique ou multiple et R" est un groupement phényle ou tert-butyle non substitué ou substitué de manière unique ou multiple.

4. Procédé selon l'une quelconque des revendications 1 à 3, **caractérisé en ce que** la réaction de (I) avec le composé de carbonyle (II) se fait en présence d'un acide ou d'un acide de Lewis inorganique ou organique libre ou lié à un polymère, en particulier l'acide p-toluènesulfonique ou un échangeur de cations acide,
et/ou
par élimination de l'eau formée par distillation azéotropique ou par addition d'un agent déshydratant, en particulier un tamis moléculaire de 4 Å.

5. Procédé selon l'une quelconque des revendications 1 à 4, **caractérisé en ce que** le composé (III) est transformé en un composé métallisé (IIIa) : 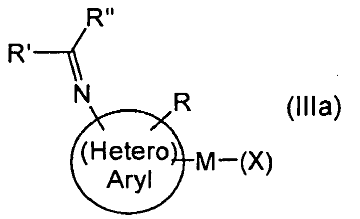 dans lequel M désigne un métal alcalin ou alcalinoterreux, du zinc ou de l'aluminium.

6. Procédé selon la revendication 5, **caractérisé en ce que** le dérivé d'aminoarène ou d'aminohétéroarène protégé (III) est converti par un composé d'organomagnésium ou d'organolithium en dérivé d'aminoarène ou d'aminohétéroarène protégé métallisé (IIIa).

7. Procédé selon la revendication 5 ou la revendication 6, **caractérisé en ce que** la métallisation se fait par l'intervention d'un catalyseur redox en présence ou en l'absence d'un solvant.

8. Procédé selon l'une quelconque des revendications 1 à 7, **caractérisé en ce que** l'agent de métallisation est préparé, puis l'aminoarène ou l'aminohétéroarène protégé (III) est dosé en fonction de l'agent de métallisation et, ensuite, est amené à réagir avec le borane ou le borate trisubstitué (IV), dissous ou non dissous dans un solvant.

9. Procédé selon l'une quelconque des revendications 1 à 7, **caractérisé en ce que** l'agent de métallisation est préparé dans un solvant et le composé d'aminoarène ou d'aminohétéroarène protégé (III) et le borane ou le borate trisubstitué (IV), l'un ou l'autre ou tous deux dissous ou non dissous dans un solvant, sont dosés en parallèle ou sous forme de mélange.

10. Procédé selon l'une quelconque des revendications 1 à 7, **caractérisé en ce que** le composé d'aminoarène ou d'aminohétéroarène protégé (III) est préparé, puis l'agent de métallisation, dissous ou non dissous dans un solvant, est dosé et, ensuite, le borane ou le borate trisubstitué (IV), dissous ou non dissous dans un solvant, est amené à la réaction avec le mélange réactionnel.

11. Procédé selon l'une quelconque des revendications 1 à 7, **caractérisé en ce que** le composé d'aminoarène ou d'aminohétéroarène protégé (III) et le borane ou le borate trisubstitué (IV) sont préparés et l'agent de métallisation, dissous ou non dissous dans un solvant, est dosé.

12. Procédé selon l'une quelconque des revendications 1 à 11, **caractérisé en ce que** les dérivés d'acide d'aminoarène ou d'aminohétéroarène obtenus (VI) sont fonctionnalisés dans une autre étape avec ou sans isolement intermédiaire de (VI) sur le groupement amino par alkylation ou formation d'amide ou de carbonate, en particulier par réaction avec des halogénures d'alkyle, des halogénures ou des anhydrides d'acides inorganiques ou organiques ou des dicarbonates organiques, en particulier par le dicarbonate de di-tert-butyle (Boc-anhydride).
